# EUROPÄISCHE PATENTSCHRIFT

(11) **EP 1 211 168 B1**
(45) Veröffentlichungstag und Bekanntmachung des Hinweises auf die Patenterteilung: **14.09.2005**
(21) Anmeldenummer: 00126045.4
(22) Anmeldetag: 29.11.2000
(51) Int. Cl.: B62D 51/06, A01D 34/00

(54) **Landschaftspflegegerät**
Landscape maintenance apparatus
Appareil d'entretien de paysage

(43) Veröffentlichungstag der Anmeldung: 05.06.2002
(73) Patentinhaber: Julius Tielbürger GmbH & Co. KG, D-32351 Stemwede-Oppenwehe (DE)
(72) Erfinder: Tielbürger, Dirk, 32369 Rahden (DE)
(74) Vertreter: Dantz, Jan Henning

(56) Entgegenhaltungen:
- US-A- 4 878 339
- US-A- 4 882 897
- US-A- 5 138 824
- US-A- 5 442 901
- US-A- 6 094 897

## Beschreibung

Die Erfindung betrifft ein Landschaftspflegegerät mit einem Antriebsmotor und mit wenigstens einem schaltbaren Getriebe mit einer Nullstellung und mindestens zwei Funktionsstellungen, die mit im Führungsbereich angeordneten, von Hand schaltbaren Schaltelementen, die mit einem Schaltglied des Getriebes verbunden sind, wobei an einem Holm im Bedienungsbereich des Landschaftspflegegerätes zwei jeweils eine Funktionsstellung des Antriebes auslösende Schaltgriffe derart schwenkbar angeordnet sind, daß im Normalfall mit einer Hand der Holm und ein Schaltgriff greifbar sind.

Das in Frage kommende Landschaftspflegegerät kann beispielsweise ein Einachsschlepper sein, der mit auswechselbaren Pflegewerkzeugen ausgestattet ist, beispielsweise mit einem Mähbalg, mit einer Kehrbürste, einem Räumfeld oder dergleichen.

Das Landschaftspflegegerät kann jedoch auch ein Kleintraktor oder ein Rasentraktor sein. Sofern es sich um einen Einachsschlepper handelt, erfolgt die Führung durch einen etwa dreieckförmigen Führungslenker, an dessen Längsholmen in den Endbereichen die Bedienelemente angeordnet sind. Die Bedienelemente sind notwendig, um beispielsweise das Getriebe des Fahrantriebes zu schalten, beispielsweise in die beiden Funktionsstellungen Vorwärtsfahrt und Rückwärtsfahrt, wobei in der Nullstellung des Schaltelementes das Landschaftspflegegerät trotz laufenden Antriebsmotors stillsteht.

Ferner ist noch ein Bedienelement notwendig, um das Werkzeug einzuschalten, beispielsweise das Messer des Mähbalkens.

Die Verbindung der Bedienungselemente mit dem Schaltglied des Getriebes bzw. mit den Schaltgliedern der Getriebe erfolgt bevorzugt über Bowdenzüge oder auch über Schaltgestänge. Die Schaltelemente können Drehhebel oder Schaltgriffe sein, die an einem Holm im Bedienungsbereich festgelegt sind.

Aus der gattungsgemäßen US 5 138 824 ist ein Rasenmäher bekannt, der als Einachsschlepper angesehen werden kann. Auch dieser Rasenmäher ist mit einem schaltbaren Antrieb für das Messer und mit einem schaltbaren Fahrantrieb ausgerüstet.

Am freien Endbereich eines Holmes des Führungslenkers ist ein Schaltgriff für den Fahrantrieb drehbar gelagert, um den Fahrantrieb in fünf Geschwindigkeitsstufen für die Vorwärtsfahrt und in eine Geschwindigkeitsstufe für die Rückwärtsfahrt zu schalten.

Jede Stellung des Schalthebels entspricht dann eine Geschwindigkeitsstufe. Der Schalthebel verbleibt in der jeweiligen Stellung, nachdem er entsprechend geschwenkt wurde. Außerdem ist noch ein Sicherheitshebel am Holm gelagert, der betätigt werden muß, um den Einachsmäher in eine Fahrstellung zu bringen. Zum Starten des Antriebsmotors müssen die Schalthebel in einer solchen Stellung stehen, daß weder der Antrieb für das Messer noch der Fahrantrieb aktiviert werden.

Es ist auch schon bekannt, zum Schalten des Getriebes für die Vorwärts- und Rückwärtsfahrstellung an einem Holm zwei Schaltgriffe anzubringen, weil beim Ziehen eines Schaltgriffes das Getriebe in die Vorwärtsfahrtstellung und beim Ziehen des anderen Schaltgriffes das Getriebe in die Rückwärtsfahrstellung geschaltet wird.

Der Bedienkomfort für die das Landschaftspflegegerät führende Person ist bei den zuvor beschriebenen Ausführungen recht hoch, doch es ist insbesondere beim Arbeiten in einem schwierigen Gelände nicht auszuschließen, daß die das Landschaftspflegegerät führende Person beide Hebel zieht. Dies muß jedoch vermieden werden.

Der Erfindung liegt die Aufgabe zugrunde, ein Landschaftspflegegerät der eingangs näher beschriebenen Art so zu gestalten, daß Fehlbedienungen auch dann vermieden werden, wenn zwei Schaltgriffe an einem Holm im Bedienungsbereich des Landschaftspflegegerätes angeordnet sind und die beiden Schaltgriffe unterschiedliche Funktionen auslösen.

Die gestellte Aufgabe wird gelöst, indem den beiden Schaltgriffen eine einen Anschlag aufweisende Fehlbedienungssperre zugeordnet ist, die einen Anschlag aufweist, der einem Schaltgriff zugeordnet ist, und daß die damit zusammenwirkende Randkante des anderen Handschaltgriffes bogen- oder kurvenförmig gestaltet ist, und daß der Anschlag außerhalb der Schwenkachse des Schaltgriffes liegt.

Durch die Fehlbedienungssperre kann nunmehr nur einer der beiden Schaltgriffe gezogen bzw. betätigt werden, so daß Fehlschaltungen vermieden werden. Dadurch wird zumindest das Getriebe vor einer Beschädigung geschützt,

Es kann nunmehr passieren, daß versehentlich der falsche Schaltgriff betätigt wird, so daß es anstelle einer Vorwärtsfahrt zur Rückwärtsfahrt kommt oder auch umgekehrt.

Die erfindungsgemäße Lösung ist konstruktiv besonders einfach. Der Anschlag kann normalerweise nicht entfernt werden, so daß die Funktion der Fehlbedienungssperre stets gegeben ist.

Die dem Anschlag zugeordnete Randkante des anschlagfreien Handgriffes ist derart bogen- oder kurvenförmig gestaltet, daß die Randkante beim Schwenken dieses Handgriffes am Anschlag entlang gleitet oder in einem geringen Abstand dazu steht, so daß der den Anschlag aufweisende Schaltgriff blockiert ist.

Die Wirkung des Anschlages als Fehlbedienungssperre ist voll gegeben, wenn in einfachster Weise der Schaltgriff zumindest im Bereich der Schwenkachse U-förmig gestaltet ist, daß die offenen Seiten der beiden Schaltgriffe einander zugewandt liegen, und daß die Schwenkachse im Bereich der freien Ränder jedes Schaltgriffes liegt.

Durch die U-förmige Gestaltung läßt sich auch in einfachster Weise jeder Schaltgriff am Holm lagern, da der U-förmige Bereich des Schaltgriffes den Holm übergreift, der Holm nur mit einer Bohrung versehen sein muß, durch die ein Bolzen gesteckt wird, der auch die Bohrungen des U-förmigen Teiles jedes Schaltgriffes durchtritt.

Der Anschlag kann auch ein angeschweißter Bolzen, ein Niet oder auch eine Schraube sein. Die Verbindung zwischen dem Schaltglied des Getriebes und den beiden Schaltgriffen erfolgt beispielsweise durch zwei Bowdenzüge. Zum Anschluß dieser Bowdenzüge ist jeder Schaltgriff mit einem gegenüber der Drehachse versetzten Stift versehen. Aus Sicherheitsgründen ist es erforderlich, dass bei eingeschaltetem Antrieb der Schaltgriff betätigt wird. Sobald dieser losgelassen wird muß das Schaltglied des Getriebes in die Nullstellung gebracht werden. Es ist deshalb vorgesehen, dass jedem Schaltgriff ein Kraftspeicher, vorzugsweise eine Feder derart zugeordnet ist, dass die Betätigung des Schaltgriffes entgegen der Wirkung der Feder erfolgt. Diese Feder muß nicht unbedingt direkt den Schaltgriffen zugeordnet sein, sondern sie kann auch mit dem Schaltglied des Getriebes zusammenwirken. Die Schaltgriffe sind bevorzugt aus Metall, beispielsweise Stahl gefertigt. Desgleichen gilt für den Holm. Damit beim Loslassen der Schaltgriff nicht direkt auf den Holm schlägt ist vorgesehen, dass der Holm mit zwei einander diametral gegenüberliegenden Anschlägen aus einem elastischen Material versehen ist. Diese Anschläge wirken nicht nur dämpfend sondern auch geräuschmindernd. Zur komfortablen Bedienung des Landschaftspflegegerätes ist vorgesehen, dass der Holm im Bereich der Schaltgriffe mit einem aufgesteckten Handgriff aus einem elastischen Material, beispielsweise Gummi bestückt ist. In der Funktionsstellung der Schaltgriffe fallen deren freie Enden mit dem freien Ende des Holmes zusammen oder annähernd zusammen. Dadurch wird noch zusätzlich die Sicherheit erhöht, da normalerweise der Handgriff ergriffen wird und somit auch der Handgriff so, dass der andere Handgriff nicht erreichbar ist.

Anhand der beiliegenden Zeichnungen wird die Erfindung noch näher erläutert. Es zeigen:
- Figur 1: die an einem Holm schwenkbar gelagerten Schaltgriffe in der Nullstellung und
- Figuren 2 u. 3: die Schaltgriffe in zwei verschiedenen Stellungen.

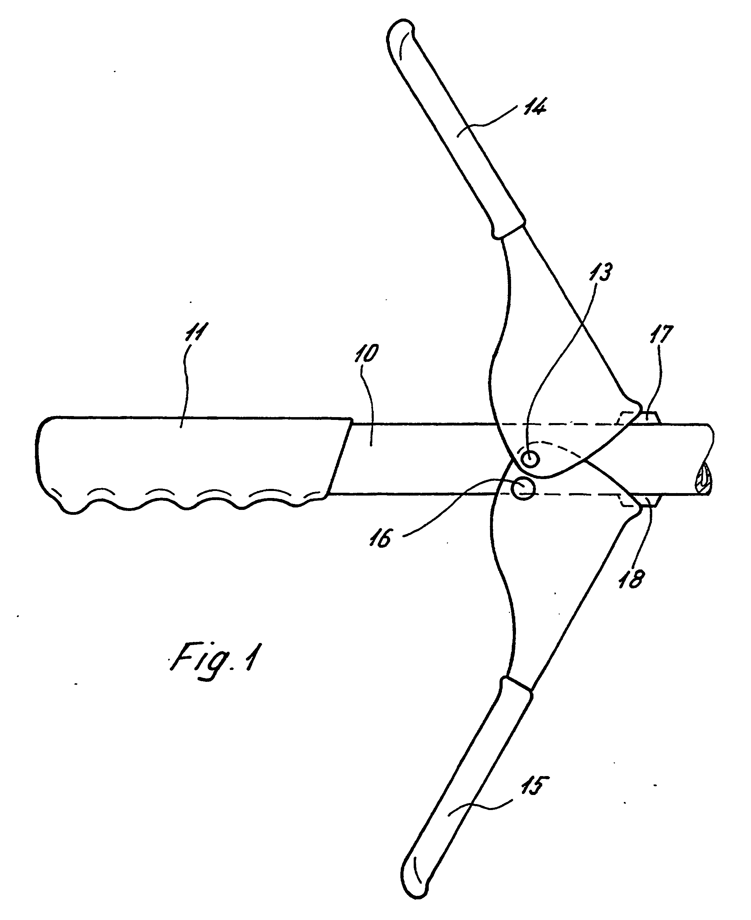

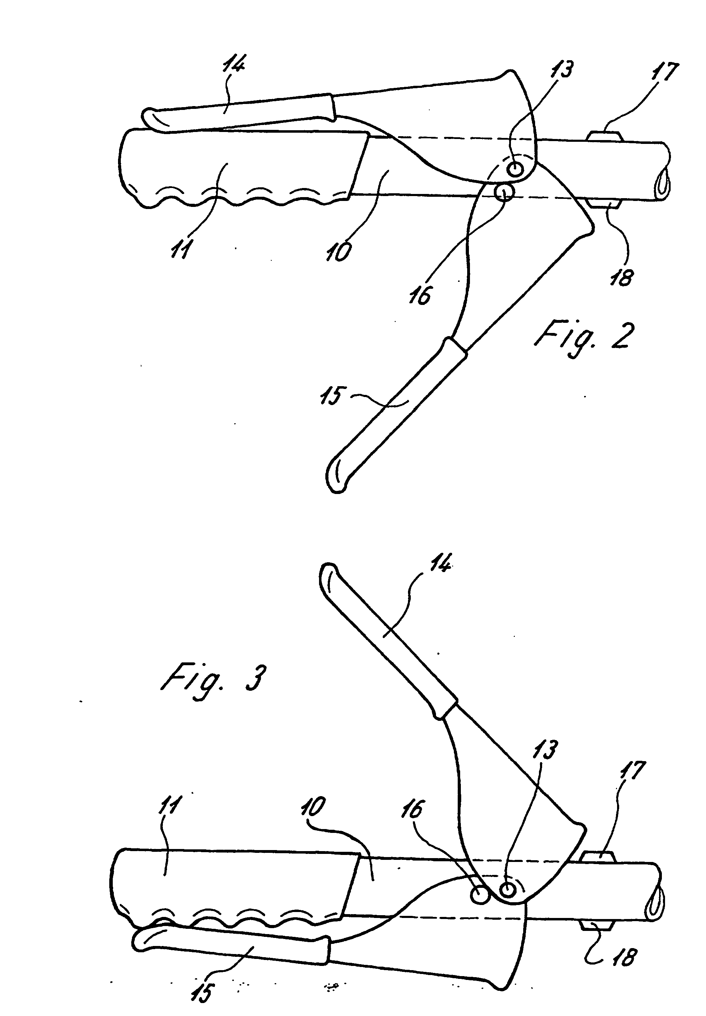

In der Figur 1 ist ein aus Rohr gefertigter Holm 10 dargestellt, der beispielsweise der freie Endbereich eines Längsholmes eines Führungslenkers für einen Einachsschlepper sein kann. In ergonomisch günstiger Weise ist auf den Endbereich des Holmes 10 ein Handgriff 11 aus einem elastischen Material aufgesteckt. Im Abstand zum freien Ende ist der Holm 10 mit einer Querbohrung versehen, in die ein Bolzen 13 fest eingesetzt ist, durch den die Drehachse von zwei Schaltgriffen 14, 15 bestimmt sind. Die Schaltgriffe 14, 15 sind in dem dem Holm 10 zugewandten Endbereich im Querschnitt u-förmig ausgebildet, so dass sie den Holm 10 umgreifen. Außerdem sind diese Bereiche mit fluchtenden Bohrungen versehen, durch den die Enden des Bolzens bzw. des Stiftes 13 geführt sind. Im dargestellten Ausführungsbeispiel ist der Schaltgriff 15 mit einem Anschlag 16 ausgestattet der gegenüber der Außenfläche vorsteht und in einem, bezogen auf die Länge des Schaltgriffes 15, relativ geringen Abstand zur Drehachse 13 steht. Die dem Anschlag 16 zugeordnete Randkante des Schaltgriffes 14 ist derart bogen- oder kurvenförmig gestaltet, dass beim Schwenken des Schaltgriffes 14 in Richtung zum Holm 10 gemäß der Figur 2 diese Randkante an dem Anschlag 16 entlanggleitet oder in einem geringen Abstand dazu steht. Die Figur 2 zeigt, dass bei gehaltenem Schaltgriff 14 ein Schwenken des Schaltgriffes 15 durch den Anschlag 16 verhindert wird. Nach Loslassen des Schaltgriffes 14 schwenkt dieser durch Federkraft in die in der Figur 1 dargestellte Nullstellung. Es kann dann der Schaltgriff 15 geschwenkt werden, wobei in diesem Falle der Anschlag 16 an der Randkante des Schaltgriffes 14 entlanggleitet, wobei auch ein geringer Abstand zwischen dem Anschlag 16 und der Handkante vorhanden sein kann. Die Figur 3 zeigt, dass bei gezogenem Schaltgriff 15 der Schaltgriff 14 nicht betätigt werden kann. Es ist selbstverständlich, dass auch die umgekehrte Anordnung möglich ist, nämlich dass der Anschlag 16 am Schaltgriff 14 angeordnet ist. Die Figur 1 zeigt außerdem, dass der Holm 10 noch zwei weitere Endanschläge 17, 18 aufweist, die aus einem elastischen Material gefertigt sein können. In den Nullstellungen schlagen die der Schwenkachse 13 gegenüberliegenden Kanten der Schalthebel 14, 15 gegen diese Endanschläge 17, 18 die um einen Winkel von 90° versetzt zur Drehachse stehen. In nicht näher dargestellter Weise ist jeder Schaltgriff 14, 15 an der dem Anschlag 16 gegenüberliegenden Seite mit einem Anschluß ausgestattet, um die Verbindung zum Schaltglied eines Getriebes herzustellen. Dies könnte beispielsweise ein Gestänge oder ein Bowdenzug sein. Durch die Betätigung der Schaltgriffe 14, 15 könnte beispielsweise das Getriebe in die Vorwärts- bzw. Rückwärtsfahrt geschaltet werden. Es ist jedoch auch möglich, dass der Antrieb für ein am Landschaftspflegegerät angebautes Werkzeug damit geschaltet wird. Die Figuren 2 und 3 zeigen, dass die freien Enden der Schaltgriffe 14, 15in der jeweiligen Funktionsstellung mit dem Ende des Holmes 10 zusammenfallen bzw. in einem nicht nennenswerten Versatz zueinander stehen, so dass der durch einen auf den Holm 10 aufgesteckteckten Handgriff 11 die Lage der Hand beim Betätigen des Schaltgriffes 14 oder 15 vorgegeben ist.

Wesentlich ist, dass die beiden am Holm 10 schwenkbar angeordneten Schaltgriffe 14, 15 mit einer Fehlbedienungssperre ausgerüstet sind, um Fehlbedienungen zum Schutz des Gerätes zu vermeiden.

## Patentansprüche

1. Landschaftspflegegerät mit einem Antriebsmotor und mit wenigstens einem schaltbaren Getriebe mit einer Nullstellung und mindestens zwei Funktionsstellungen sowie mit im Führungsbereich angeordneten, von Hand schaltbaren Schaltelementen, die mit einem Schaltglied des Getriebes verbunden sind, wobei an einem Holm (10) im Bedienungsbereich des Landschaftspflegegerätes zwei jeweils eine Funktionsstellung des Antriebes auslösende Schaltgriffe (14, 15) derart schwenkbar angeordnet sind, daß im Normalfall mit einer Hand der Holm (10) und ein Schaltgriff (14 oder 15) greifbar sind, **dadurch gekennzeichnet, daß** den beiden Schaltgriffen (14, 15) eine einen Anschlag (16) aufweisende Fehlbedienungssperre zugeordnet ist, der einem Schaltgriff zugeordnet ist, und daß die damit zusammenwirkende Randkante des anderen Schaltgriffes (14) bogen- oder kurvenförmig gestaltet ist, und daß der Anschlag außerhalb der Schwenkachse des Schaltgriffes (15) liegt.

2. Landschaftspflegegerät nach Anspruch 1, **dadurch gekennzeichnet, daß** die Schalgritten (14, 15) zumindest im Bereich der Schwenkachse (13) U-förmig gestaltet sind, daß die offenen Seiten einander zugewandt liegen und daß die Schwenkachse (13) im Bereich der freien Ränder der Schaltgriffe (14, 15) liegt.

3. Landschaftspflegegerät nach Anspruch 1 oder 2 **dadurch gekennzeichnet, daß** die dem Anschlag (16) zugeordnete Randkante des anschlagfreien Schaltgriffes (14) derart bogen- oder kurvenförmig gestaltet ist, daß diese Randkante beim Schwenken des Handgriffes (14) am Anschlag (16) entlang gleitet oder in einem geringen Abstand dazu steht, so daß der den Anschlag (16) aufweisende Schaltgriff (15) blockiert ist.

4. Landschaftspflegegerät nach einem oder mehreren der vorhergehenden Ansprüche 1-3, **dadurch gekennzeichnet, daß** die dem Anschlag (16) zugeordnete Randkante des anschlagfreien Handgriffes (14) derart bogen- oder kurvenförmig gestaltet ist, daß beim Verschwenken des mit dem Anschlag ausgerüsteten Schaltgriffes (15) der Anschlag (16) an der Randkante des anschlagfreien Schaltgriffes (14) entlang gleitet oder in einem geringen Abstand dazu steht, so daß der anschlagfreie Schaltgriff (14) blockiert ist.

5. Landschaftspflegegerät nach einem oder mehreren der vorhergehenden Ansprüche 1-4, **dadurch gekennzeichnet, daß** der Holm (10) zwei Endanschläge (17, 18) aus einem elastischen Material derart aufweist, daß die der Schwenkachse (13) für die Schaltgriffe (14, 15) abgewandt liegenden, dem Holm (10) zugewandten Randkanten in der Nullstellung an den Endanschlägen (17, 18) anliegen.

6. Landschaftspflegegerät nach Anspruch 5, **dadurch gekennzeichnet, daß** die Endanschläge (17, 18) um einen Winkel von 90° gegenüber der Drehachse (13) der Schaltgriffe (14, 15) versetzt sind, und daß die Endanschläge (17, 18) in Längsrichtung des Holmes (10) gegenüber der Drehachse (13) versetzt sind, und daß sie an der dem freien Ende des Holmes (10') abgewandten Seite der Drehachse (13) stehen.

7. Landschaftspflegegerät nach einem oder mehreren der vorhergehenden Ansprüche 1-6, **dadurch gekennzeichnet, daß** jeder Schaltgriff (14, 15) mit einem gegenüber der Drehachse (13) versetzten Anschluß für die zum Schaltglied des Getriebes führenden Verbindungselemente versehen ist, und daß dieser Anschlag vorzugsweise ein Stift ist.

8. Landschaftspflegegerät nach einem oder mehreren der vorhergehenden Ansprüche 1-7, **dadurch gekennzeichnet, daß** auf den freien Endbereich des Holmes (10) ein Handgriff (11) aufgesetzt ist, und daß in der Funktionsstellung jedes Schaltgriffs (14, 15) dessen freies Ende mit dem Ende des Holmes zusammenfällt oder annähernd zusammenfällt.

## Claims

1. Landscape maintenance apparatus having a drive motor and having at least one switchable gear mechanism having a zero setting and at least two operating settings, and having switching elements which are disposed in the guide region and are switchable by hand and which are connected to a switching member of the gear mechanism, wherein, in the control area of the landscape maintenance apparatus, two switch handles (14, 15), which respectively actuate an operating setting of the drive, are pivotably disposed on a cross member (10) in such a way that the cross member (10) and a switch handle (14 or 15) can normally be gripped with a hand, **characterized in that** to the two switch handles (14, 15) there is assigned an operating error lock, which has a stop (16) and is assigned to a switch handle, and **in that** the marginal edge of the other switch handle (14) interacting therewith is of arc-shaped or curved configuration, and **in that** the stop is situated outside the pivot axis of the switch handle (15).

2. Landscape maintenance apparatus according to Claim 1, **characterized in that** the switch handles (14, 15), at least in the region of the pivot axis (13), are of U-shaped configuration, **in that** the open sides are situated one facing the other and **in that** the pivot axis (13) is situated in the region of the free margins of the switch handles (14, 15).

3. Landscape maintenance apparatus according to Claim 1 or 2, **characterized in that that** marginal edge of the stop-free switch handle (14) which is assigned to the stop (16) is configured in an arc shape or a curve shape in such a way that this marginal edge, when the handle (14) is pivoted, slides along the stop (16) or stands slightly remote from it so that the switch handle (15) having the stop (16) is blocked.

4. Landscape maintenance apparatus according to one or more of the preceding Claims 1-3, **characterized in that that** marginal edge of the stop-free handle (14) which is assigned to the stop (16) is configured in an arc shape or a curve shape in such a way that, when the switch handle (15) equipped with the stop is pivoted, the stop (16) slides along the marginal edge of the stop-free switch handle (14) or stands slightly remote from it so that the stop-free switch handle (14) is blocked.

5. Landscape maintenance apparatus according to one or more of the preceding Claims 1-4, **characterized in that** the cross member (10) has two end stops (17, 18), made of an elastic material, such that the marginal edges which are situated facing away from the pivot axis (13) for the switch handles (14, 15) and facing toward the cross member (10) bear in the zero setting against the end stops (17, 18).

6. Landscape maintenance apparatus according to Claim 5, **characterized in that** the end stops (17, 18) are offset by an angle of 90° relative to the rotation axis (13) of the switch handles (14, 15), and **in that** the end stops (17, 18) are offset in the longitudinal direction of the cross member (10) relative to the rotation axis (13), and **in that** they stand on that side of the rotation axis (13) which is facing away from the free end of the cross member (10').

7. Landscape maintenance apparatus according to one or more of the preceding Claims 1-6, **characterized in that** each switch handle (14, 15) is provided with a connection, which is offset relative to the rotation axis (13), for the connecting elements leading to the switching member of the gear mechanism, and **in that** this stop is preferably a pin.

8. Landscape maintenance apparatus according to one or more of the preceding Claims 1-7, **characterized in that** a handle (11) is fitted onto the free end region of the cross member (10), and **in that**, in the operating setting of each switch handle (14, 15), the free end thereof coincides or approximately coincides with the end of the cross member.

## Revendications

1. Machine d'entretien des jardins comportant un moteur d'entraînement et au moins une transmission commutable avec une position neutre et au moins deux positions fonctionnelles ainsi que des éléments de commutation pouvant être commandés à la main, disposés dans la zone de conduite, lesquels sont reliés à un organe de commutation de la transmission, sur un longeron (10), dans la zone de commande de la machine d'entretien des jardins, deux poignées de commutation (14, 15), déclenchant chacune une position fonctionnelle du dispositif d'entraînement, étant disposées pivotantes de manière qu'en cas normal on puisse saisir d'une main le longeron (10) et une poignée de commutation (14 ou 15), **caractérisée en ce qu'**aux deux poignées de commutation (14, 15) est associé un blocage contre une erreur de commande comportant une butée (16), auquel est associée une poignée de commutation, et **en ce que** l'arête de bordure, coopérant avec celui-ci, de l'autre poignée de commutation (14), présente une forme arquée ou courbée, et **en ce que** la butée se situe à l'extérieur de l'axe de pivotement de la poignée de commutation (15).

2. Machine d'entretien des jardins selon la revendication 1, **caractérisée en ce que** les poignées de commutation (14, 15) ont la forme d'un U au moins dans la zone de l'axe de pivotement (13), **en ce que** les côtés ouverts sont tournés l'un vers l'autre et **en ce que** l'axe de pivotement (13) se situe dans la zone des bords libres des poignées de commutation (14, 15).

3. Machine d'entretien des jardins selon la revendication 1 ou 2, **caractérisée en ce que** l'arête de bordure associée à la butée (16) de la poignée de commutation (14) sans butée présente une forme arquée ou courbée telle que cette arête de bordure glisse le long de la butée (16), lors du pivotement de la poignée (14), ou se trouve à une faible distance de celle-ci, ce qui fait que la poignée de commutation (15), comportant la butée (16), est bloquée.

4. Machine d'entretien des jardins selon une ou plusieurs des revendications précédentes 1 à 3, **caractérisée en ce que** l'arête de bordure associée à la butée (16) de la poignée (14) sans butée présente une forme arquée ou courbée telle que lors du pivotement de la poignée de commutation (15) équipée de la butée, la butée (16) glisse le long de l'arête de bordure de la poignée de commutation (14) sans butée ou se trouve à une faible distance de celle-ci, ce qui fait que la poignée de commutation (14) sans butée est bloquée.

5. Machine d'entretien des jardins selon une ou plusieurs des revendications 1 à 4 précédentes, **caractérisée en ce que** le longeron (2) comporte deux butées terminales (17, 18) en un matériau élastique tel que les arêtes de bordure tournées vers le longeron (10), et à l'opposé de l'axe de pivotement (13) des poignées de commutation (14, 15), s'appliquent, dans la position neutre, contre les butées terminales (17, 18).

6. Machine d'entretien des jardins selon la revendication 5, **caractérisée en ce que** les butées terminales (17, 18) sont décalées d'un angle de 90° par rapport à l'axe de rotation (13) des poignées de commutations (14, 15), et **en ce que** les butées terminales (17, 18) sont décalées dans la direction longitudinale du longeron (10) par rapport à l'axe de rotation (13), et **en ce qu'**elles se trouvent sur le côté de l'axe de rotation (13), opposé à l'extrémité libre du longeron (10').

7. Machine d'entretien des jardins selon une ou plusieurs des revendications 1 à 6 précédentes, **caractérisée en ce que** chaque poignée de commutation (14, 15) est pourvue d'une butée, décalée par rapport à l'axe de rotation (13), pour les éléments de liaison menant à l'organe de commutation de la transmission, et **en ce que** cette butée est de préférence une broche.

8. Machine d'entretien des jardins selon une ou plusieurs des revendications 1 à 7 précédentes, **caractérisée en ce que** sur la zone terminale libre du longeron (10) est placée une poignée (11) et **en ce que** dans la position fonctionnelle de chaque poignée de commutation (14, 15) son extrémité coïncide ou coïncide approximativement avec l'extrémité du longeron.
